# FASCICULE DE BREVET EUROPEEN

(11) **EP 1 349 451 B1**
(45) Date de publication et mention de la délivrance du brevet: **07.07.2004**
(21) Numéro de dépôt: 01903853.8
(22) Date de dépôt: 02.01.2001
(51) Int. Cl.: A01K 81/04

(54) **FUSIL DE CHASSE SOUS-MARINE DE TYPE ARBALETE COMPORTANT UN DISPOSITIF DE BANDAGE**
UNTERWASSERHARPUNE VOM ARMBRUSTTYP MIT SPANNVORRICHTUNG
CROSSBOW-TYPE UNDERWATER GUN COMPRISING A STRETCHING DEVICE

(43) Date de publication de la demande: 08.10.2003
(73) Titulaire: Gillet, Jean-Claude, 20137 Porto-Vecchio (FR); Leroux, Jacques, 20135 Conca (FR)
(72) Inventeur: Gillet, Jean-Claude, 20137 Porto-Vecchio (FR); Leroux, Jacques, 20135 Conca (FR)
(74) Mandataire: Domange, Maxime
(86) Numéro de dépôt international: PCT/FR2001/000008
(87) Numéro de publication internationale: WO 2002/052932

(56) Documents cités:
- FR-A- 2 758 623
- FR-A- 2 758 878
- FR-A- 2 781 980

## Description

La présente invention concerne un fusil de chasse sous-marine de type arbalète, c'est à dire comportant des liens élastiques latéraux dénommés communément « sandows », que l'on bande afin de propulser la flèche.

De façon classique, ces fusils sont constitués d'une crosse prolongée par un tube porte-flèche et munie d'une gâchette de déclenchement. Le tube supporte un mécanisme de propulsion de la flèche constitué de deux sandows latéraux. Les extrémités avant de ces sandows sont fixées sur une pièce support qui est disposée au niveau de la tête du fusil, et qui sert aussi généralement de moyen de guidage de la flèche. Les extrémités arrières des sandows sont reliées par un anneau métallique appelé « obus » qui est destiné à venir s'insérer dans une encoche aménagée dans la partie arrière de la flèche, en vue de propulser celle-ci après bandage des sandows.

L'armement traditionnel de ces fusils est effectué à l'aide de la force directe des deux bras, en bandant les sandows en direction de la crosse, et en accrochant l'obus dans l'encoche de la flèche. Cependant, cette opération nécessite un effort important qui n'est pas à la portée de tous les individus, en particulier dans le cas de fusil de chasse de forte puissance, c'est à dire avec un long tube porte-flèche et le cas échéant une pluralité de sandows latéraux. Dans ce cas, la crosse doit être en appui contre l'abdomen. Par ailleurs, des risques de blessures des doigts de la main sont encourus en cas de mauvaise fixation de l'obus dans une encoche de la flèche, ou lors du lâcher des sandows, sans oublier les douleurs abdominales causées par la crosse en appui.

Le but de la présente invention est de fournir un fusil de chasse sous-marine de type arbalète muni d'un dispositif de bandage simple, fiable et permettant à n'importe quel individu, même de faible constitution de réaliser son armement en toute sécurité.

Pour ce faire la présente invention fournit un fusil de chasse sous-marine de type arbalète comprenant :
- une crosse comprenant un mécanisme de blocage de l'extrémité arrière d'une flèche et un organe de déblocage de ladite flèche, de préférence une gâchette, et
- un élément longitudinal support de flèche dont l'extrémité arrière est encastrée dans ladite crosse,
- des moyens élastiques de propulsion comprenant au moins deux liens élastiques latéraux de type sandow, dont les extrémités avant sont aptes à se fixer sur des éléments de fixation et les extrémités arrières sont aptes à s'accrocher dans au moins une encoche dans la partie arrière de ladite flèche,

Selon l'invention, le fusil comprend un dispositif de bandage desdits liens élastiques comprenant :
- une pièce de tête mobile à laquelle peuvent être fixés lesdits premiers éléments de fixations, ladite pièce de tête étant apte à coulisser le long de la partie avant dudit élément support de flèche entre :
   . une position arrière permettant d'accrocher sans tension lesdits liens élastiques dans ladite encoche, et
   . une position avancée dans laquelle lesdits liens élastiques sont étirés au maximum lorsqu'ils sont accrochés dans ladite encoche, et
- une tige, ladite pièce de tête mobile étant apte à coulisser le long dudit élément support de flèche par déplacement de ladite tige dans sa direction longitudinale, de préférence parallèle à celle dudit élément longitudinal support de flèche et
- un bras de levier, ledit bras de levier coopérant avec ladite tige par l'intermédiaire d'un dispositif de poussée et retenue qui permet :
   . de déplacer ladite tige dans ladite direction longitudinale sous une action de pivotement dudit bras de levier, et
   . de maintenir ladite tige en une position avancée correspondant à la distance de déplacement de ladite tige résultant dudit pivotement du bras de levier, pendant que ledit bras de levier est ramené dans sa position initiale par pivotement inverse,
   . de sorte que l'on peut ainsi réaliser le bandage desdits liens élastiques en réalisant une succession de pivotements dudit bras de levier entre une position initiale et une position de poussée.

Dans un mode de réalisation particulier, ledit bras de levier coopère avec un axe transversal de pivotement, solidaire dudit élément longitudinal support de flèche rendant ledit bras de levier apte à pivoter par rotation autour dudit axe entre :
. une position initiale haute où ledit bras est de préférence sensiblement parallèle à la partie arrière dudit élément longitudinal support de flèche et dessous celui-ci, et
. une position basse de poussée où ledit bras de levier est en position inclinée ou verticale. On entend ici par « transversal » une direction perpendiculaire à ladite direction longitudinale

De façon pratique, ledit axe de pivotement du bras de levier est situé sensiblement en partie médiane du fusil et est à l'extrémité avant dudit bras de levier, celui-ci se prolongeant vers l'arrière du fusil, de sorte qu'on fait pivoter le bras de levier de haut en bas en poussant sur celui-ci vers le bas.

De façon particulièrement avantageuse, le dispositif de poussée et de retenue est de type mécanique et comprend :
- une pièce de poussée comprenant un orifice traversé par ladite tige et de diamètre sensiblement supérieur à celui de ladite tige, de sorte que ladite pièce de poussée peut pivoter par rapport à l'axe de ladite tige, entre :
   . une position désaxée de poussée et blocage dans laquelle ladite pièce de poussée est rendue solidaire de ladite tige et peut entraîner celle-ci dans ladite direction longitudinale vers l'avant sous l'effet de pivotement dudit bras de levier, et
   . une position de retour dans laquelle ladite tige se trouve dans l'axe dudit premier orifice, et ladite pièce de poussée peut ainsi revenir librement dans sa position initiale par translation dans ladite direction longitudinale vers l'arrière, et
- une pièce de retenue comprenant un orifice traversé par ladite tige de diamètre sensiblement supérieur à celui de ladite tige, de sorte que ladite pièce de retenue peut pivoter par rapport à l'axe de la tige, entre :
   . une position désaxée de retenue et blocage, dans laquelle ladite pièce de retenue bloque la tige en empêchant celle-ci de coulisser dans ladite direction longitudinale vers l'arrière, et
   . une position de déblocage, dans laquelle la tige peut coulisser dans ladite direction longitudinale librement,
- ladite pièce de retenue étant maintenue en dite position de retenue et blocage pendant que ladite pièce de poussée est dans sa dite position de retour, et ladite pièce de retenue étant maintenue en dite position de déblocage lorsque ladite tige coulisse dans ladite direction longitudinale vers l'avant.

En actionnant ladite pièce de retenue vers la position de déblocage, lorsque les sandows sont étirés et la flèche armée, on provoque le désarmement, ladite pièce de tête mobile étant tractée vers l'arrière par les sandows.

De préférence, ledit orifice de ladite pièce de poussée comprend un orifice sous forme d'un élément tubulaire constituant ainsi un pallier de blocage plus efficace. Ladite pièce de poussée comprend alors une plaque inférieure sur laquelle peut s'exercer l'action conduisant au pivotement dudit élément tubulaire.

Avantageusement, le fusil sous-marin selon l'invention comprend les caractéristiques suivantes selon lesquelles :
- ledit bras de levier est rendu solidaire de ladite pièce de poussée, de préférence solidaire d'une plaque de ladite pièce de poussée, par une biellette, de sorte que le pivotement dudit bras de levier entraîne le pivotement de ladite pièce de poussée, ladite pièce de poussée se trouvant en :
   une dite position désaxée de blocage lorsque ledit bras de levier pivote depuis sa dite position initiale vers sa dite position de poussée, et
   . une dite position de retour lorsque ledit bras de levier pivote en sens inverse depuis sa dite position de poussée vers sa dite position initiale.
- ladite pièce de retenue est maintenue dans sa dite position de retenue par un moyen élastique de rappel en extension, de préférence en matériau élastomère, qui peut être comprimé par pivotement de ladite pièce de retenue vers ladite position de déblocage.

Ainsi, le dispositif de poussé et de retenue ne nécessite la mise en oeuvre que d'un seul moyen élastique de rappel.

C'est donc par un phénomène d'arc-boutement alternatif des deux pièces de poussée et de retenue qui sont articulées sur ladite tige solidarisée avec ladite pièce mobile de tête sur laquelle sont fixés les sandows, qu'à chaque manoeuvre du bras de levier, ladite pièce de poussée pousse la tige, tandis que ladite pièce de retenue la retient. Manoeuvré par un seul bras, l'armement se fait sans effort par une succession en général de 4 à 8 pivotements.

Dans un mode de réalisation, le fusil présente les caractéristiques suivantes, selon lesquelles :
- ladite pièce de retenue présente une forme en L avec une première plaque et une deuxième plaque formant un angle droit à l'extrémité inférieure de ladite première plaque,
- ledit orifice de ladite pièce de retenue se trouvant en partie supérieure de ladite première plaque, et
- ledit moyen de rappel élastique se présentant sous forme annulaire autour de ladite tige en extension entre un élément de butée fixe et ladite première plaque,
- ledit moyen de rappel élastique exerçant une poussée sur ladite première plaque, la poussant en position inclinée correspondant à ladite position de retenue par blocage de ladite pièce de retenue, de préférence l'extrémité supérieure de ladite première plaque étant inclinée vers l'arrière dudit fusil,
- ladite première plaque pouvant pivoter vers ladite position de déblocage de ladite pièce de retenue par déplacement de ladite tige dans ladite direction longitudinale vers l'avant et par pivotement de ladite deuxième plaque, de préférence de bas en haut, provoquant dans les deux cas la compression dudit moyen de rappel élastique, de sorte que l'on peut désarmer ladite flèche par pression exercée de bas en haut à l'aide d'un doigt sur ladite deuxième plaque.

Ledit élément de butée fixe est solidaire dudit élément longitudinal. D'autre part, on comprend que lorsque la tige avance sous l'effet du pivotement dudit bras de levier, elle comprime ledit moyen de rappel élastique et débloque ladite pièce de retenue.

Dans un mode de réalisation, ledit fusil comprend un socle fixe solidaire dudit élément longitudinal support de flèche, ledit socle supportant ledit axe transversal de pivotement dudit bras de levier et les différentes pièces constitutives dudit dispositif de poussée et de retenue.

En particulier, ledit socle renferme lesdites pièces de poussée et lesdites pièces de retenue, ainsi que les différents autres éléments constitutifs du dispositif de retenue tel que ledit moyen de rappel élastique et ledit élément de butée fixe,

Plus particulièrement, ledit socle comprend au moins un, de préférence au moins deux orifice(s) inférieurs) traversé(s) par ladite tige et, de préférence encore, au moins un orifice supérieur traversé par ledit élément longitudinal support de flèche consistant en un tube porte-flèche.

Lesdits orifices dudit socle constituent également des paliers de blocage lorsque l'axe longitudinal de ladite tige se trouve en position désaxée.

Avantageusement, ladite pièce de tête mobile comprend un premier orifice traversé par un dit tube porte-flèche et un deuxième orifice traversé par ladite flèche et lui servant de moyen de guidage, et un logement creux dans lequel vient buter ladite tige pour faire coulisser ladite pièce de tête mobile vers l'avant.

La présente invention fournit également un dispositif de bandage utile pour la réalisation d'un fusil sous-marin de type arbalète selon la revendication 10.

Ce dispositif de bandage peut être fourni sous forme d'un kit adaptable sur tout fusil sous-marin du type arbalète, et non muni de dispositif de bandage.

D'autres caractéristiques et avantages de la présente invention apparaîtront à la lumière de la description détaillée qui va suivre, fait en référence aux dessins annexés dans laquelle :

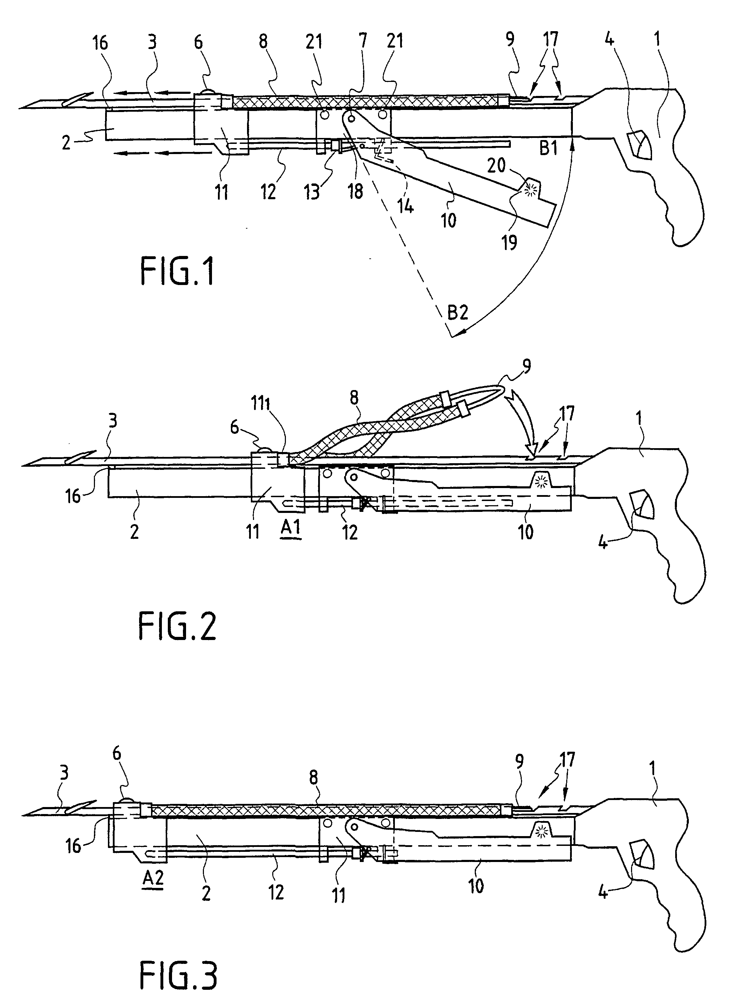

- Les figures 1 à 3 sont des vues de côté d'un fusil selon la présente invention, la figure 2 représente le fusil en position désarmée, la figure 3 représente le fusil en position armée et la figure 1 représente une position intermédiaire.
- La figure 4A représente une vue de côté du fusil selon l'invention au niveau du socle support du bras de levier 10 et de la tige 12, avec une vue partielle en coupe longitudinale du dispositif de poussée et de retenue.
- La figure 4B est une vue selon la coupe AA de la figure 4a.
- La figure 5A est une vue de côté d'un mode de réalisation dudit bras de levier.
- La figure 5B est une vue de dessous du bras de levier de la figure 5A.
- La figure 5C est une vue en coupe BB de la figure 5A.

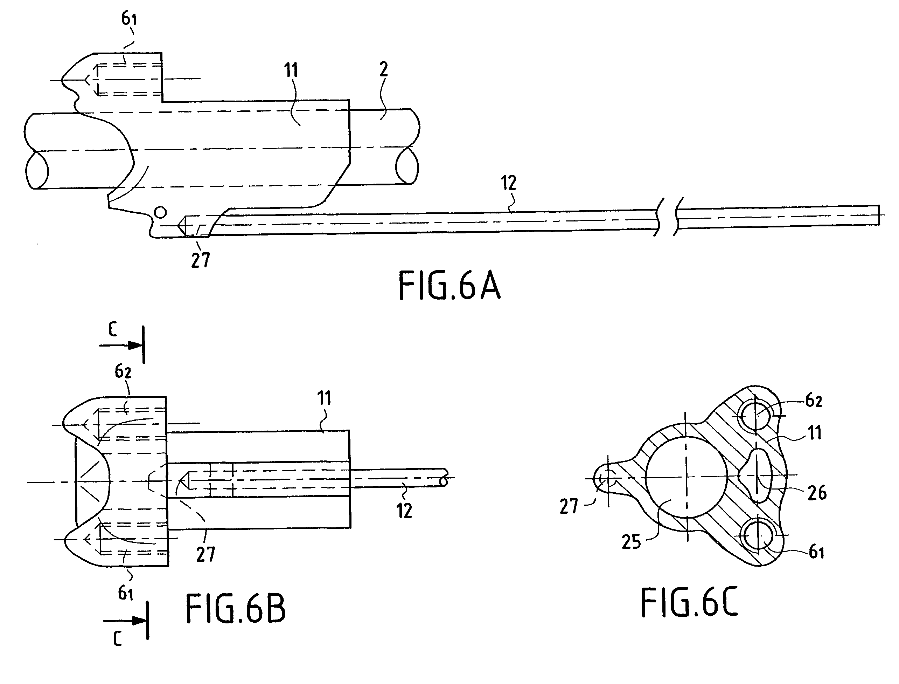

- La figure 6 représente une vue de côté de la pièce mobile 11 dans laquelle vient buter la tige mobile 12.
- La figure 6B est une vue de dessus de la pièce mobile 11 de la figure 6.
- La figure 6C est une vue en coupe CC de la figure 6B de la pièce mobile 11.

Le fusil sous-marin de type arbalète selon l'invention comprend une crosse 1 comprenant une gâchette 4 et un mécanisme de blocage (non représenté) intégré dans la crosse 1 apte à retenir l'extrémité arrière de la flèche 3 lorsque celle-ci est mise en place et enclenchée dans la crosse. Ladite gâchette 4 coopère avec ledit mécanisme de blocage, de façon à pouvoir libérer la flèche et déclencher sa propulsion lorsque ladite gâchette est actionnée. Un tube porte-flèche 2 est encastré dans ladite crosse 1, sur le tube porte-flèche 2, la flèche est posée.

Une pièce de tête mobile 11 coulisse le long dudit tube porte-flèche 2, entre une position en arrière (A1 ) vers laquelle elle vient buter contre un socle fixe 18 et une position avancée (A2) dans laquelle elle vient buter contre une butée 16 à l'extrémité avant du tube porte-flèche 2. La pièce de tête mobile 11 comprend un premier orifice 25 traversé par ledit tube porte-flèche 2. Mais on pourrait prévoir un mode de réalisation dans lequel la pièce mobile 11 coulisse à l'intérieur dudit tube porte-flèche 2. La pièce de tête mobile 11 comprend également un orifice supérieur 26 traversé par ladite flèche 3, et lui servant de moyen de guidage.

Deux sandows 8 disposés au-dessus et de part et d'autre du tube porte-flèche 2 sont fixés à leur extrémité avant par des premiers éléments de fixation 11₂, 11₁ qui sont solidaires de ladite pièce mobile 11, se fixent par vissage dans des logements creux latéraux 6₁, 6₂ de celle-ci. Les extrémités arrières des sandows 9 sont reliés l'un à l'autre par un élément d'accrochage 9 apte à coopérer avec une ou plusieurs encoches 17 dans la partie arrière de la flèche 3.

Un anneau métallique 9 formant « obus » relie les deux extrémités arrières des sandows 8. L'obus 9 est solidarisé avec l'extrémité arrière des sandows 8 au moyen de liaison vissés classiques.

Pour armer la flèche 3 sur le fusil, on réaliser les étapes suivantes :
1/ on recule (A1 ) la pièce de tête mobile 1 en la faisant coulisser en arrière jusqu'à ce que les sandows puissent être accrochés sans tension par l'intermédiaire dudit élément d'accrochage 9 dans unedite encoche 17, et
2/ On fait coulisser la pièce de tête mobile 11 vers l'avant (A2) jusqu'à ce que les sandows soient étirés au maximum, à l'aide d'une série de moyens constituant en combinaison avec la pièce mobile 11 un dispositif de bandage des sandows 8.

Le dispositif de bandage des sandows 8 comprend en effet, entre ladite pièce mobile 11, une tige 12 s'étendant parallèlement au tube porte-flèche 2 et dessous celui-ci dans le mode de réalisation représenté sur les figures, étant entendu que ladite tige mobile 12 pourrait être placée à l'intérieur du tube porte-flèche 2 si la pièce mobile 11 coulissait à l'intérieur dudit tube porte-flèche. Le dispositif de bandage des sandows 8 comprend également un bras de levier 10. La tige 12 et le bras de levier 10 sont supportés par un socle 18 fixe solidaire du tube porte-flèche 2 dans sa partie médiane. Tel que représenté sur les figures, le socle 18 comprend un orifice circulaire 28 traversé par ledit tube porte-flèche et un deuxième orifice inférieur 29 traversé par ladite tige 12.

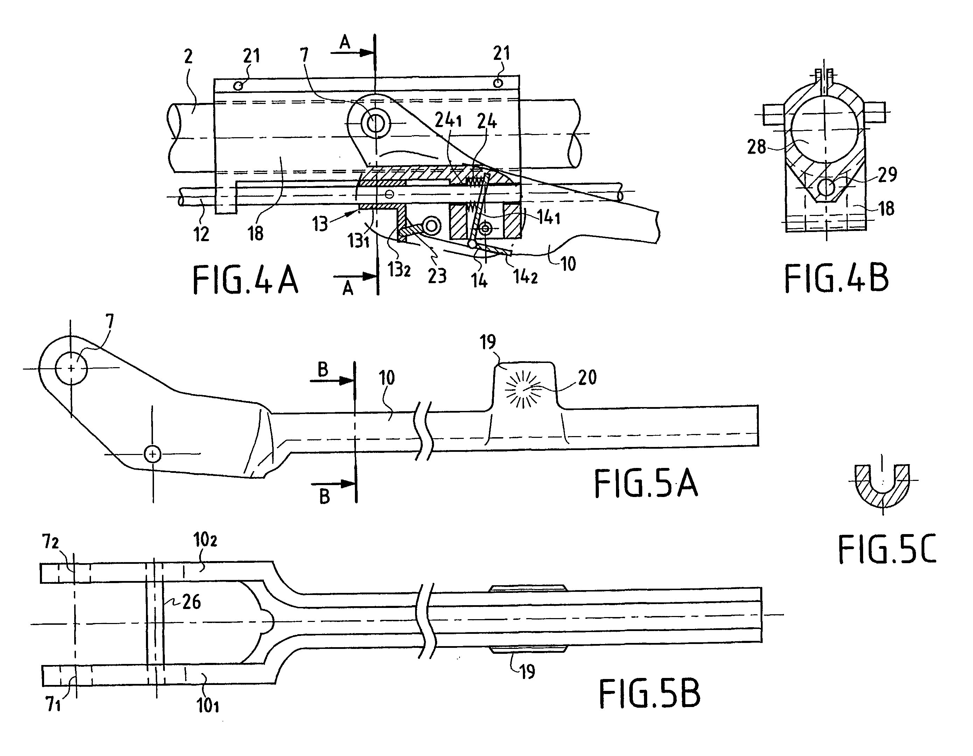

Le bras de levier 10 comporte à une extrémité deux fourches 10₁ et 10₂, lesdites fourches 10₁ et 10₂ comprenant des orifices 7₁, 7₂ à leur extrémité, traversés par l'axe horizontal 7 dudit bras de levier. Les deux branches 10₁ et 10₂ du bras de levier 10 enfourchent ledit socle 18 et ledit axe horizontal 7 traverse ledit socle 18 et ledit tube porte-flèche 2. Le bras de levier 10 présente une forme en creux de forme générale semi-cylindrique représenté sur la figure 5c, lui permettant d'épouser la forme du tube porte-flèche lorsqu'il est replié par pivotement vers le haut contre le tube porte-flèche 2. Le bras de levier 10 se prolonge vers l'arrière d'une longueur variable suivant le modèle du fusil. Sa longueur est aussi adaptée à la variété des longueurs de tube et suivant la puissance des sandows. Il peut en effet être réalisé plus ou moins long en fonction de l'effort maximum souhaité pour l'armement du fusil.

Le socle 18 renferme une pièce de poussée 13 comprenant un élément tubulaire 13₁ traversé par ladite flèche 12 de diamètre sensiblement supérieur à celui de ladite tige 12, de sorte que ledit élément tubulaire 13₁ peut se désaxer par rapport à l'axe longitudinal de ladite tige 12. Ladite pièce de poussée 13 comprend également une pièce 13₂ perpendiculaire audit élément tubulaire 13₁. Ladite pièce perpendiculaire 13₂ est reliée audit bras de levier 10 par l'intermédiaire d'une biellette 23, de sorte que le pivotement dudit bras de levier 10 depuis une position haute (B1) parallèle audit tube porte-flèche 2 jusqu'à une position basse de poussée (B2) inclinée ou verticale par rapport audit tube porte-flèche 2 bloque ledit élément tubulaire 13₁ contre ladite tige 12 et entraîne celle-ci en déplacement longitudinal vers l'avant. L'extrémité avant de la tige 12 coopère avec un logement creux 27 inférieur dans ladite pièce mobile 11, entraînant le déplacement longitudinal par coulissement de celle-ci.

La tige 12 peut être rendu solidaire de la pièce mobile 11 dans ledit logement creux 27.

Lorsqu'on fait pivoter en sens inverse ledit bras de levier depuis sa dite position basse de poussée (B2) vers sa position initiale haute (B1) parallèle audit tube porte-flèche 2, ladite tige 12 se retrouve dans l'axe dudit élément tubulaire 13₁, et peut ainsi revenir librement dans sa position initiale par déplacement longitudinal vers l'arrière. Ledit socle 18 comprend une deuxième pièce de retenue 14 qui présente une forme en L avec une première plaque 14₁ et une deuxième plaque 14₂ formant un angle droit à l'extrémité inférieure de ladite première plaque 14₁. La partie supérieure de ladite première plaque 14₁ présente un orifice de diamètre sensiblement supérieur à celui de la tige 12 et traversé par celle-ci, de sorte que ladite première plaque 14₁ peut pivoter par rapport à l'axe de la tige 12 sous l'effet de la poussée exercée par un moyen d'extension élastique en élastomère 24 poussant la partie supérieure de ladite première plaque 14₁ en position inclinée vers l'arrière du fusil et bloquant ainsi la tige 12 à l'intérieur dudit orifice de ladite première plaque de par la présence du moyen d'extension élastique 24, qui se trouve en position comprimée et qui cherche à retrouver sa position initiale expansée en poussant l'extrémité supérieure de ladite première plaque 14₁, ladite pièce 14 assure le blocage et la retenue de la tige 12, en particulier l'empêchant de coulisser vers l'arrière dans la direction longitudinale lorsque ladite pièce de poussée 13 revient dans sa position initiale par pivotement du bras de levier de bas en haut. En revanche, lorsque ladite tige 12 coulisse dans la direction longitudinale vers l'avant sous l'effet du pivotement de haut en bas dudit bras de levier 10. Le coulissement vers l'avant de ladite tige 12 provoque une compression du moyen d'extension élastique 24 et partant réduit l'inclinaison de ladite première plaque 14₁, de sorte que l'axe de l'orifice supérieur de ladite première plaque 14₁ se rapproche angulairement de l'axe de la tige 12 et permet le déblocage de la tige 12 et le coulissement de celle-ci vers l'avant. Ladite deuxième plaque 14₂ permet en exerçant une poussée sur celle-ci de bas en haut de faire pivoter ladite première plaque 14₁ pour la ramener dans une position de déblocage de ladite tige 12 et provoquant la compression du moyen d'extension élastique permettre le désarmement de la flèche 3 en tant que de besoin.

Par translation vers l'avant de la tige mobile 12 qui pousse la pièce mobile 11 coulissant sur le tube porte-flèche 2 que l'armement de la flèche se fait après plusieurs manoeuvres de bras de levier 10, chaque manoeuvre entraînant une avancée de la tige 12, l'armement se faisant par plusieurs manoeuvres du bras de levier successives.

Ledit moyen d'extension élastique 24 peut être remplacé par un système mécanique ou de ressort.

Sur les figures, la pièce de retenue 14 est représentée en arrière de ladite pièce de poussée 13. Toutefois, dans un autre mode de réalisation, il est possible de les inverser, ladite pièce de retenue 14 se trouvant en avant de ladite pièce de poussée 13, ce qui peut en simplifier le montage.

Des moyens de verrouillage permettent de solidariser le bras de levier avec le tube porte flèche 2 lorsqu'on fait pivoter ledit bras de levier 10 vers ledit tube porte-flèche 2. Ces moyens de verrouillage peuvent être constitués d'un dispositif d'encliquetage 19, 20 comprenant des bossages latéraux 19 montés sur deux oreilles latérales 20 qui permettent d'encliqueter le tube porte-flèche 2 à l'intérieur entre lesdites oreilles latérales 20.

Lorsque les manoeuvres d'armement sont terminées et que le bras de levier 10 est encastré sur le tube 2, les sandows 8 sont étirés au maximum et exercent un effet de traction sur la flèche 3 dans l'axe longitudinal et dans le sens avant. Plusieurs encoches 17 peuvent être réalisées sur la longueur de la flèche 3 pour disposer d'un choix de force de propulsion multiple. Par effet d'arc-boutement alternatif des pièces de poussée 13 et pièces de retenue 14 articulées sur la tige 12 dans le socle 18, l'armement se fait sans effort à un seul bras par le bras de levier 10.

Le désarmement est possible sans avoir à procéder au tir par libération du phénomène d'arc-boutement de la pièce 14 en forme de L en exerçant une traction vers le haut sur la deuxième plaque 14₂.

Dans une variante de réalisation (non représentée), l'ensemble du tube porte-flèche 2 et du dispositif de bandage peut être recouvert par un fût en bois : l'ensemble étant encastré dans le fût et ainsi rendu invisible et donc plus esthétique.

Dans une autre variante de réalisation (non représentée), ladite pièce de tête mobile 11 est fixée sur un premier élément du tube porte-flèche 2, ledit tube porte-flèche 2 étant en effet constitué d'un ou plusieurs éléments de tubes concentriques et coulissant les uns dans les autres, l'élément de tube extérieur étant ledit premier élément de tube. Dans ce mode de réalisation, le fusil sous-marin présente donc un tube porte-tête télescopique.

## Revendications

1. Fusil de chasse sous-marine de type arbalète comprenant :
- une crosse (1) comprenant un mécanisme de blocage de l'extrémité arrière d'une flèche (3) et un organe de déblocage de ladite flèche, de préférence une gâchette (4), et
- un élément longitudinal support de flèche (2) dont l'extrémité arrière est encastrée dans ladite crosse (1),
- des moyens élastiques de propulsion comprenant au moins deux liens élastiques latéraux (8) de type sandow, dont les extrémités avant sont aptes à se fixer sur des éléments de fixation (11₁, 11₂) et les extrémités arrières sont aptes à s'accrocher dans au moins une encoche (17) dans la partie arrière de ladite flèche (3),
**caractérisé en ce qu'**il comprend un dispositif de bandage desdits liens élastiques (8) comprenant :
- une pièce de tête mobile (11) à laquelle peuvent être fixés lesdits premiers éléments de fixations (11₁, 11₂), ladite pièce de tête (11) étant apte à coulisser le long de la partie avant dudit élément support de flèche (2) entre :
. une position arrière (A1 ) permettant d'accrocher sans tension lesdits liens élastiques (8) dans ladite encoche (17), et
. une position avancée (A2) dans laquelle lesdits liens élastiques (8) sont étirés au maximum lorsqu'ils sont accrochés dans ladite encoche (17), et
- une tige (12), ladite pièce de tête mobile (11) étant apte à coulisser le long dudit élément support de flèche (2) par déplacement de ladite tige (12) dans sa direction longitudinale, de préférence parallèle à celle dudit élément longitudinal support de flèche (2), et
- un bras de levier (10), ledit bras de levier (10) coopérant avec ladite tige (12) par l'intermédiaire d'un dispositif de poussée et retenue (13, 14, 23, 24) qui permet :
de déplacer ladite tige (12) dans ladite direction longitudinale sous une action de pivotement dudit bras de levier (10), et
. de maintenir ladite tige (12) en une position avancée correspondant à la distance de déplacement de ladite tige (12) résultant dudit pivotement du bras de levier (10), pendant que ledit bras de levier (10) est ramené dans sa position initiale (B1) par pivotement inverse,
. de sorte que l'on peut ainsi réaliser le bandage desdits liens élastiques (8) en réalisant une succession de pivotements dudit bras de levier (10) entre une position initiale (B1) et une position de poussée (B2).

2. Fusil de chasse sous-marine de type arbalète selon la revendication 1, **caractérisé en ce que** ledit bras de levier (10) coopère avec un axe transversal (7) de pivotement, solidaire dudit élément longitudinal support de flèche (2), rendant ledit bras de levier apte à pivoter par rotation autour dudit axe (7) entre :
. une position initiale (B1) haute où ledit bras est de préférence sensiblement parallèle à la partie arrière dudit élément longitudinal support de flèche (2) et dessous celui-ci, et
. une position basse de poussée (B2) où ledit bras de levier (10) est en position inclinée ou verticale.

3. Fusil de chasse sous-marine de type arbalète selon la revendication 1 ou 2, **caractérisé en ce que** ledit dispositif de poussée est retenu comprend :
- une pièce de poussée (13) comprenant un orifice traversé par ladite tige (12) et de diamètre sensiblement supérieur à celui de ladite tige (12),de sorte que ladite pièce de poussée (13) peut pivoter par rapport à l'axe de ladite tige (12), entre :
. une position désaxée de poussée et blocage dans laquelle ladite pièce de poussée (13) est rendue solidaire de ladite tige (12) et peut entraîner celle-ci dans ladite direction longitudinale vers l'avant sous l'effet de pivotement dudit bras de levier (10), et
. une position de retour dans laquelle ladite tige (12) se trouve dans l'axe dudit premier orifice, et ladite pièce de poussée (13) peut ainsi revenir librement dans sa position initiale par translation dans ladite direction longitudinale vers l'arrière, et
- une pièce de retenue (14) comprenant un orifice traversé par ladite tige (12) de diamètre sensiblement supérieur à celui de ladite tige (12), de sorte que ladite pièce de retenue (14) peut pivoter par rapport à l'axe de la tige (12), entre:
. une position désaxée de retenue et blocage, dans laquelle ladite pièce de retenue (14) bloque la tige (12) en empêchant celle-ci de coulisser dans ladite direction longitudinale vers l'arrière, et
. une position de déblocage, dans laquelle la tige (12) peut coulisser dans ladite direction longitudinale librement,
- ladite pièce de retenue (14) étant maintenue en dite position de retenue et blocage pendant que ladite pièce de poussée (13) est dans sa dite position de retour, et ladite pièce de retenue (14) étant maintenue en dite position de déblocage lorsque ladite tige (12) coulisse dans ladite direction longitudinale vers l'avant.

4. Fusil de chasse sous-marine de type arbalète selon les revendications 1 à 3, **caractérisé en ce que** ledit bras de levier (10) est rendu solidaire de ladite pièce de poussée (13), de préférence solidaire d'une plaque (13₂) de ladite pièce de poussée, par une biellette (23), de sorte que le pivotement dudit bras de levier (10) entraîne le pivotement de ladite pièce de poussée (13), ladite pièce de poussée (13) se trouvant en :
. une dite position désaxée de blocage lorsque ledit bras de levier (10) pivote depuis sa dite position initiale (B1) vers sa dite position de poussée (B2), et
. une dite position de retour lorsque ledit bras de levier (10) pivote en sens inverse depuis sa dite position de poussée vers sa dite position initiale.

5. Fusil de chasse sous-marine de type arbalète selon l'une des revendication 1 à 4, **caractérisé en ce que** ladite pièce de retenue (14) est maintenue dans sa dite position de retenue par un moyen élastique de rappel (24) en extension, de préférence en matériau élastomère, qui peut être comprimé par pivotement de ladite pièce de retenue (14) vers ladite position de déblocage.

6. Fusil de chasse sous-marine de type arbalète selon l'une des revendications 1 à 5, **caractérisé en ce que** ladite pièce de retenue (14) présente une forme en L avec une première plaque (14₁) et une deuxième plaque (14₂) formant un angle droit à l'extrémité inférieure de ladite première plaque (14₁),
- ledit orifice de ladite pièce de retenue (14) se trouvant en partie supérieure de ladite première plaque (14₁), et
- ledit moyen de rappel élastique (24) se présentant sous forme annulaire autour de ladite tige (12) en extension entre un élément de butée fixe (24₁) et ladite première plaque (14₁),
- ledit moyen de rappel élastique (24) exerçant une poussée sur ladite première plaque (14₂), la poussant en position inclinée correspondant à ladite position de retenue par blocage de ladite pièce de retenue (14), de préférence l'extrémité supérieure de ladite première plaque (14₁) étant inclinée vers l'arrière dudit fusil,
- ladite première plaque (14₁) pouvant pivoter vers ladite position de déblocage de ladite pièce de retenue (14) par déplacement de ladite tige (12) dans ladite direction longitudinale vers l'avant et par pivotement de ladite deuxième plaque, de préférence de bas en haut, provoquant dans les deux cas la compression dudit moyen de rappel élastique (24), de sorte que l'on peut désarmer ladite flèche (3) par pression exercée de bas en haut à l'aide d'un doigt sur ladite deuxième plaque (14₂).

7. Fusil de chasse sous-marine de type arbalète selon l'une des revendications 1 à 6, **caractérisé en ce qu'**il comprend un socle (18) fixe solidaire dudit élément longitudinal support de flèche (2), ledit socle (18) supportant ledit axe transversal de pivotement (7) dudit bras de levier (10) et les différentes pièces constitutives (13, 14, 23, 24) dudit dispositif de poussée et de retenue.

8. Fusil de chasse sous-marine de type arbalète selon la revendication 7, **caractérisé en ce que** ledit socle (18) comprend au moins un, de préférence au moins deux orifice(s) inférieurs) (29) traversées) par ladite tige (12) et, de préférence encore, au moins un orifice supérieur (28) traversé par ledit élément longitudinal support de flèche consistant en un tube porte-flèche (2).

9. Fusil de chasse sous-marine de type arbalète selon l'une des revendications 1 à 8, **caractérisé en ce que** ladite pièce de tête mobile (11) comprend un premier orifice (25) traversé par un dit tube porte-flèche (2) et un deuxième orifice (26) traversé par ladite flèche (3) et lui servant de moyen de guidage, et un logement creux (27) dans lequel vient buter ladite tige (12) pour faire coulisser ladite pièce de tête mobile (11) vers l'avant.

10. Dispositif de bandage utile pour la réalisation d'un fusil sous-marin de type arbalète selon l'une des revendications 1 à 9, **caractérisé en ce qu'**il comprend :
- une dite pièce de tête mobile (11) telle que définie dans l'une des revendications 1 et 9, et
- un dit dispositif de poussée et de retenue comprenant :
. une dite tige (12) telle que définie dans l'une des revendications 1, 3, 6, 8 et 9 et
. un dit bras de levier (10) tel que défini dans l'une des revendications 1, 2, 3, 4 et 7, et
. de préférence un dit socle (18) tel que défini dans l'une des revendications 7 et 8 supportant ladite tige (12) et ledit bras de levier (10) et desdites pièces de poussée (13) telles que définies dans l'une des revendications 1, 3, 4 et 7 et pièces de retenue (14) telles que définies dans l'une des revendications 1, 3, 5, 6 et 7.

## Patentansprüche

1. Unterwasserharpune vom Armbrusttyp, umfassend:
- einen Schaft (1), umfassend einen Feststellmechanismus für das hintere Ende eines Pfeils (3) und ein Element zum Lösen dieses Pfeils, vorzugsweise einen Drücker (4), und
- ein Längsunterstützungselement für den Pfeil (2), dessen hinteres Ende in den Schaft (1) eingespannt ist,
- elastische Schubmittel, umfassend mindestens zwei seitliche elastische Bindeglieder (8) vom Typ Gummiseil, deren vordere Enden auf Befestigungselementen (11₁, 11₂) befestigt werden können und deren hintere Enden sich in mindestens einer Kerbe (17) in dem hinteren Teil des Pfeils (3) einhaken können,
- **dadurch gekennzeichnet, dass** sie eine Streckungsvorrichtung für die elastischen Bindeglieder (8) besitzt, umfassend:
- ein bewegliches Kopfstück (11), an dem die ersten Befestigungselemente (11₁, 11₂) befestigt werden können, wobei das Kopfstück (11) entlang des vorderen Teils des Unterstützungselements für den Pfeil (2) gleiten kann, zwischen:
- einer hinteren Position (A1), die es ermöglicht, ohne Spannung die elastischen Bindeglieder (8) in der Kerbe (17) einzuhaken, und
- einer vorgeschobenen Position (A2), in der die elastischen Bindeglieder (8) maximal ausgezogen sind, wenn sie in der Kerbe (17) eingehakt sind, und
- eine Stange (12), wobei das bewegliche Kopfstück (11) entlang des Unterstützungselements für den Pfeil (2) durch Verschiebung der Stange (12) in ihre Längsrichtung, vorzugsweise parallel zu jener des Längsunterstützungselements des Pfeils (2) gleiten kann, und
- einen Hebelarm (10), wobei der Hebelarm (10) mit der Stange (12) über eine Schub- und Haltevorrichtung (13, 14, 23, 24) zusammenwirkt, die es ermöglicht:
- die Stange (12) in Längsrichtung durch Schwenken des Hebelarms (10) zu verschieben, und
- die Stange (12) in einer vorgeschobenen Position zu halten, die der Verschiebedistanz der Stange (12) entspricht, die sich aus dem Schwenken des Hebelarms (10) ergibt, während der Hebelarm (10) wieder in seine Ausgangsposition (B1) durch umgekehrtes Schwenken zurückgeführt wird,
- so dass die Streckung der elastischen Bindeglieder (8) auf diese Weise durchgeführt werden kann, indem aufeinander folgende Schwenkbewegungen des Hebelarms (10) zwischen einer Ausgangsposition (B1) und einer Schubposition (B2) durchgeführt werden.

2. Unterwasserharpune vom Armbrusttyp nach Anspruch 1, **dadurch gekennzeichnet, dass** der Hebelarm (10) mit einer Querschwenkachse (7) zusammenwirkt, die mit dem Längsunterstützungselement des Pfeils (2) fest verbunden ist, die den Hebelarm in die Lage versetzt, durch Drehung um die Achse (7) zu schwenken zwischen:
- einer oberen Ausgangsposition (B1), in der der Arm vorzugsweise im Wesentlichen parallel zum hinteren Teil des Längsunterstützungselements des Pfeils (2) und unter diesem angeordnet ist, und
- einer unteren Schubposition (B2), in der der Hebelarm (10) in geneigter oder vertikaler Position angeordnet ist.

3. Unterwasserharpune vom Armbrusttyp nach Anspruch 1 oder 2, **dadurch gekennzeichnet, dass** die Schub- und Haltevorrichtung umfasst:
- ein Schubstück (13), umfassend eine Öffnung, durch die hindurch die Stange (12) verläuft und die einen wesentlich größeren Durchmesser als die Stange (12) aufweist, so dass das Schubstück (13) in Bezug auf die Achse der Stange (12) schwenken kann zwischen:
- einer versetzten Schub- und Feststellposition, in der das Schubstück (13) mit der Stange (12) fest verbunden ist und diese in die Längsrichtung nach vorne unter der Wirkung des Schwenkens des Hebelarmes (10) antreiben kann, und
- einer Rückkehrposition, in der sich die Stange (12) in der Achse der ersten Öffnung befindet und das Schubstück (13) somit frei in seine Ausgangsposition durch Translation in Längsrichtung nach hinten zurückkehren kann, und
- ein Haltestück (14), umfassend eine Öffnung, durch die hindurch die Stange (12) verläuft und die einen wesentlich größeren Durchmesser als die Stange (12) aufweist, so dass das Haltestück (14) in Bezug auf die Achse der Stange (12) schwenken kann zwischen:
- einer versetzten Halte- und Feststellposition, in der das Haltestück (14) die Stange (12) feststellt, indem es diese daran hindert, in Längsrichtung nach hinten zu gleiten, und
- einer Freigabesposition, in der die Stange (12) frei in Längsrichtung gleiten kann,
- wobei das Haltestück (14) in der genannten Halte- und Feststellposition gehalten wird, während sich das Schubstück (13) in seiner genannten Rückkehrposition befindet, und wobei das Haltestück (14) in der genannten Freigabesposition gehalten wird, wenn die Stange (12) in Längsrichtung nach vorne gleitet.

4. Unterwasserharpune vom Armbrusttyp nach den Ansprüchen 1 bis 3, **dadurch gekennzeichnet, dass** der Hebelarm (10) mit dem Schubstück (13), vorzugsweise einer Platte (13₂) des Schubstücks, durch einen Schwingarm (23) verbunden ist, so dass das Schwenken des Hebelarms (10) das Schwenken des Schubstücks (13) nach sich zieht, wobei sich das Schubstück (13) befindet in:
- einer genannten versetzten Feststellposition, wenn der Hebelarm (10) von seiner genannten Ausgangsposition (B1) in seine genannte Schubposition (B2) schwenkt, und
- einer genannten Rückkehrposition, wenn der Hebelarm (10) in umgekehrte Richtung von seiner genannten Schubposition in seine genannte Ausgangsposition schwenkt.

5. Unterwasserharpune vom Armbrusttyp nach einem der Ansprüche 1 bis 4, **dadurch gekennzeichnet, dass** das Haltestück (14) in seiner genannten Halteposition durch ein ausgezogenes elastisches Rückstellmittel (24) vorzugsweise aus Elastomermaterial gehalten wird, das durch Schwenken des Haltestücks (14) in die Freigabeposition zusammengedrückt werden kann.

6. Unterwasserharpune vom Armbrusttyp nach einem der Ansprüche 1 bis 5, **dadurch gekennzeichnet, dass** das Haltestück (14) die Form eines L aufweist, mit einer ersten Platte (14₁) und einer zweiten Platte (14₂), die einen rechten Winkel am unteren Ende der ersten Platte (14₁) bilden,
- wobei sich die Öffnung des ersten Haltestücks (14) am oberen Teil der ersten Platte (14₁) befindet, und
- wobei das elastische Rückstellmittel (24) in Ringform um die ausgezogene Stange (12) zwischen einem festen Anschlagelement (24₁) und der ersten Platte (14₁) vorgesehen ist,
- wobei das elastische Rückstellmittel (24) einen Schub auf die erste Platte (14₁) ausübt, indem es sie in die geneigte Position schiebt, die der Halteposition durch Feststellung des Haltestücks (14) entspricht, wobei vorzugsweise das obere Ende der ersten Platte (14₁) nach hinten zur Harpune geneigt ist,
- wobei die erste Platte (14₁) in die Freigabeposition des Haltestücks (14) durch Verschiebung der Stange (12) in Längsrichtung nach vorne und durch Schwenken der zweiten Platte, vorzugsweise von unten nach oben, schwenken kann, wobei in beiden Fällen das Zusammendrücken des elastischen Rückstellmittels (24) hervorgerufen wird, so dass der Pfeil (3) durch von unten nach oben mit Hilfe eines Fingers auf die zweite Platte (14₂) ausgeübten Druck entspannt werden kann.

7. Unterwasserharpune vom Armbrusttyp nach einem der Ansprüche 1 bis 6, **dadurch gekennzeichnet, dass** sie einen festen Sockel (18) umfasst, der fest mit dem Längsunterstützungselement des Pfeils (2) verbunden ist, wobei der Sockel (18) die Querschwenkachse (7) des Hebelarms (10) und die verschiedenen Bestandteile (13, 14, 23, 24) der Schub- und Haltevorrichtung trägt.

8. Unterwasserharpune vom Armbrusttyp nach Anspruch 7, **dadurch gekennzeichnet, dass** der Sockel (18) mindestens eine, vorzugsweise mindestens zwei untere Öffnung(en) (29), durch die hindurch die Stange (12) verläuft, und ferner vorzugsweise mindestens eine obere Öffnung (28) umfasst, durch die hindurch das Längsunterstützungselement des Pfeils, das in einem Pfeiltragerohr (2) besteht, verläuft.

9. Unterwasserharpune vom Armbrusttyp nach einem der Ansprüche 1 bis 8, **dadurch gekennzeichnet, dass** das bewegliche Kopfstück (11) eine erste Öffnung (25), durch die hindurch ein Pfeiltragerohr (2) verläuft, und eine zweite Öffnung (26), durch die hindurch der Pfeil (3) verläuft und die für ihn als Führungsmittel dient, und eine Hohllagerung (27) umfasst, in der die Stange (12) anschlägt, um das bewegliche Kopfstück (11) nach vorne gleiten zu lassen.

10. Streckungsvorrichtung für die Herstellung einer Unterwasserharpune vom Armbrusttyp nach einem der Ansprüche 1 bis 9, **dadurch gekennzeichnet, dass** sie umfasst:
- ein genanntes bewegliches Kopfstück (11), wie in einem der Ansprüche 1 bis 9 definiert, und
- eine genannte Schub- und Haltevorrichtung, umfassend:
- eine genannte Stange (12), wie in einem der Ansprüche 1, 3, 6, 8 und 9 definiert, und
- einen genannten Hebelarm (10), wie in einem der Ansprüche 1, 2, 3, 4 und 7 definiert, und
- vorzugsweise einen genannten Sockel (18), wie in einem der Ansprüche 7 und 8 definiert, der die Stange (12) und den Hebelarm (10) und Schubstücke (13), wie in einem der Ansprüche 1, 3, 4 und 7 definiert, und Haltestücke (14), wie in einem der Ansprüche 1, 3, 5, 6 und 7 definiert, trägt.

## Claims

1. A crossbow-type underwater gun comprising:
- a butt (1) having a mechanism for blocking the rear end of a spear (3) and a member for unblocking said spear, preferably a trigger (4);
- a longitudinal spear support element (2) whose rear end is engaged in said butt (1); and
- resilient propulsion means comprising at least two bungee type side resilient cords (8) whose front ends are suitable for being fixed to fixing elements (11₁, 11₂) and whose rear ends are suitable for engaging in at least one notch (17) in the rear portion of said spear (3);
the gun being **characterised in that** it includes a device for stretching said resilient cords (8), the device comprising:
- a moving head piece (11) to which said first fixing elements (11₁, 11₂) can be fixed, said head piece (11) being suitable for sliding along the front portion of said spear support element (2) between:
. a rear position (A1) enabling said resilient cords (8) to be engaged without tension in said notch (17); and
. an advanced position (A2) in which said resilient cords (8) are stretched maximally when they are engaged in said notch (17);
- a rod (12), said moving head piece (11) being suitable for sliding along said spear support element (2) by moving said rod (12) in its longitudinal direction, preferably parallel to that of said longitudinal spear support element (2); and
- a lever arm (10), said lever arm (10) co-operating with said rod (12) via a thrust and retaining device (13, 14, 23, 24) which makes the following possible:
. moving said rod (12) in said longitudinal direction under drive from pivoting said lever arm (10);
. holding said rod (12) in an advanced position corresponding to the travel distance of said rod (12) resulting from said pivoting of the lever arm (10), while said lever arm (10) is returned to its initial position (B1) by being pivoted in the opposite direction; and
. thereby enabling said resilient cords (8) to be stretched by performing a succession of pivoting operations on said lever arm (10) between an initial position (B1 ) and a thrusted position (B2).

2. A crossbow-type underwater gun according to claim 1, **characterised in that** said lever arm (10) co-operates with a transverse pivot pin (7) secured to said longitudinal spear support element (2), thus enabling said lever arm to pivot about said pin (7) between:
· a high initial position (B1) in which said arm is preferably substantially parallel to the rear portion of said longitudinal spear support element (2) and beneath it; and
· a low, thrusted position (B2) where said lever arm (10) is in an inclined or vertical position.

3. A crossbow-type underwater gun according to claim 1 or 2, **characterised in that** said thrust and retaining device comprises:
- a thrust piece (13) having an orifice through which said rod (12) passes, the orifice being of diameter substantially larger than the diameter of said rod (12) so that said thrust piece (13) can pivot relative to the axis of said rod (12) between:
· an off-axis, thrust and blocking position in which said thrust piece (13) is secured to said rod (12) and can entrain it forwards in said longitudinal direction under drive from pivoting said lever arm (10); and
· a return position in which said rod (12) lies on the axis of said first orifice, and said thrust piece (13) can thus return freely to its initial position by moving rearwards in translation in said longitudinal direction;
- a retaining piece (14) including an orifice through which said rod (12) passes, the orifice being substantially larger in diameter than said rod (12) such that said retaining piece (14) can pivot relative to the axis of the rod (12) between:
· an off-axis, retaining and blocking position in which said retaining piece (14) blocks the rod (12) by preventing it from sliding rearwards in said longitudinal direction; and
· an unblocking position in which said rod (12) can slide freely in said longitudinal direction; and
- said retaining piece (14) being held in said retaining and blocking position while said thrust piece (13) is in its return position, and said retaining piece (14) being held in said unblocking position while said rod (12) is sliding forwards in said longitudinal direction.

4. A crossbow-type underwater gun according to claims 1 to 3, **characterised in that** said lever arm (10) is secured to said thrust piece (13), preferably secured to a plate (13₂) of said thrust piece, by means of a link (23) in such a manner that pivoting said lever arm (10) causes said thrust piece (13) to pivot, said thrust piece (13) occupying:
. a said off-axis, blocking position when said lever arm (10) pivots from its said initial position (B1 ) towards its said thrusted position (B2); and
. a said return position when said lever arm (10) pivots in the opposite direction from its said thrusted position towards its said initial position.

5. A crossbow-type underwater gun according to one of claims 1 to 4, **characterised in that** said retaining piece (14) is held in its said retaining position by resilient extender return means (24), preferably made of elastomer material, suitable for being compressed by pivoting of said retaining piece (14) towards said unblocking position.

6. A crossbow-type underwater gun according to one of claims 1 to 5, **characterised in that** said retaining piece (14) is L-shaped having a first plate (14₁) and a second plate (14₂) forming a right angle at the bottom end of said first plate (14₁):
- said orifice of said retaining piece (14) being in the top portion of said first plate (14₁);
- said resilient return means (24) being in annular form around said rod (12) in extension between a stationary stop element (24₁) and said first plate (14₁);
- said resilient return means (24) exerting thrust on said first plate (14₂), pushing it into an inclined position corresponding to said retaining position as obtained by blocking said retaining piece (14), the top end of said first plate (14₁) preferably being inclined towards the rear of said gun; and
- said first plate (14₁) being capable of being pivoted towards said unblocking position for unblocking said retaining piece (14) by moving said rod (12) forwards in said longitudinal direction and by pivoting said second plate, preferably upwards, causing said resilient return means (24) to be compressed in both cases so that said spear (3) can be uncocked by exerting upward pressure using a finger on said second plate (14₂).

7. A crossbow-type underwater gun according to one of claims 1 to 6, **characterised in that** it includes a stationary baseplate (18) secured to said longitudinal spear support element (2), said baseplate (18) supporting said transverse pivot pin (7) of said lever arm (10) and the various component parts (13, 14, 23, 24) of said thrust and retaining device.

8. A crossbow-type underwater gun according to claim 7, **characterised in that** said baseplate (18) comprises at least one, and preferably at least two bottom orifice(s) (29) through which said rod (12) passes, and also preferably at least one top orifice (28) through which said longitudinal spear support element constituting a spear-carrier tube (2) passes.

9. A crossbow-type underwater gun according to one of claims 1 to 8, **characterised in that** said moving head piece (11) has a first orifice (25) through which said spear-carrier tube (2) passes and a second orifice (26) through which said spear (3) passes and which serves as guide means therefor, and a hollow housing (27) in which said rod (12) comes into abutment to cause said moving head piece (11) to slide forwards.

10. A stretching device useful for making a crossbow-type underwater gun according to one of claims 1 to 9, the device being **characterised in that** it comprises:
- a said moving head piece (11) as defined in claim 1 or claim 9; and
- a said thrust and retaining piece comprising:
· a said rod (12) as defined in one of claims 1, 3, 6, 8, and 9;
· a said lever arm (10) as defined in one of claims 1, 2, 3, 4, and 7; and
· preferably a said baseplate (18) as defined in claim 7 or claim 8 supporting said rod (12) and said lever arm (10) and said thrust piece (13) as defined in one of claims 1, 3, 4, and 7 and said retaining piece (14) as defined in any one of claims 1, 3, 5, 6, and 7.
